(19) **Europäisches Patentamt**
**European Patent Office**
**Office européen des brevets**

(11) **EP 1 699 257 B1**

(12) **EUROPEAN PATENT SPECIFICATION**

(45) Date of publication and mention
of the grant of the patent:
**12.09.2007 Bulletin 2007/37**

(51) Int Cl.:
*H04Q 11/04* (2006.01)    *H04L 12/56* (2006.01)
*H04L 12/64* (2006.01)

(21) Application number: **05290508.0**

(22) Date of filing: **04.03.2005**

(54) **Switch for integrated telecommunication networks.**

Vermittlung für integrierte Telekommunikationssnetzwerke

Commutateur pour réseaux de télécommunication intégrés

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**06.09.2006 Bulletin 2006/36**

(73) Proprietor: **Alcatel Lucent
75008 Paris (FR)**

(72) Inventors:
• **Cucchi, Silvio
20083 Gaggiano (Milano) (IT)**
• **Treu, Marisa
20099 Sesto S. Giovanni
(Milano) (IT)**

• **Gladiali, Giulio
20145 Milano (IT)**
• **Rossi, Paolo
20013 Magenta (Milano) (IT)**

(74) Representative: **Menzietti, Domenico et al
Alcatel Lucent
Intellectual Property & Standards
70430 Stuttgart (DE)**

(56) References cited:
**WO-A-03/094459        US-A1- 2004 160 954
US-A1- 2004 170 167**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

The present invention relates to the field of switches for telecommunication networks. More particularly, the present invention relates to a switch for integrated telecommunication networks, which is adapted to switch both TDM flows and packets. The present invention further relates to a method for switching both TDM flows and packets.

In a telecommunication network, a source node transmits information to a destination node through a number of intermediate nodes.

In packet-switched networks, the information is divided into packets, each packet being transmitted across the network independently from the other packets. The packet size may be either fixed (e.g. ATM cells) or variable (e.g. IP packets). Each packet has an overhead, which allows intermediate nodes to route the packet towards the destination node.

Besides, in circuit-switched networks, information is transmitted through the network as a continuous flow. In particular, in synchronous circuit-switched networks, all the nodes are synchronized to a reference clock signal. In these types of network, such as for example SDH or Sonet networks, information is transported by fixed-size numerical structures, which are organized in a synchronous hierarchy. In particular, each user channel (or tributary channel) is transported by a respective lower order numerical structure. Several lower order numerical structures are multiplexed by a time division multiplexing (TDM) technique in a higher order numerical structure, which is transmitted through the network as a TDM flow. Hence, each tributary channel is associated to a time slot which is located in a predefined position of the TDM flow. Such a predefined position is fixed until the tributary channel is active. Thus, intermediate nodes may route each tributary channel towards its respective destination node without demultiplexing the whole TDM flow.

As already mentioned, intermediate nodes are responsible for routing information towards respective destination nodes. For instance, intermediate nodes may cross-connect, multiplex, regenerate or amplify information.

In particular, nodes cross-connecting and/or multiplexing information, such as cross-connects and add-drop multiplexers, comprise switches. A switch is a device which is adapted to receive information through a plurality of input lines and selectively send said information to a plurality of output lines, according to the destination node of such information.

In a packet-switched network, a switch (which is also termed packet switch) switches each packet according to the content of its overhead. Typically, each input line of a packet switch is provided with a number of buffers which equals the number of output lines. Each packet incoming from a given input line is stored into the buffer corresponding to the output line indicated by the overhead content. In each buffer, packets are stored in a queue, where they wait to be taken by the respective output line. An output controller is provided for each set of buffers associated to a same output line. The output controller receives from each buffer connected to it information about the state of the queue (number of packets, packet sizes, etc.). According to these information, each output controller instructs its respective output line to take packets from the buffers associated thereto. The output controller determines the order according to which packets must be taken, in order to avoid buffer saturation and switch congestion.

In a packet switch, switching is thus dynamically controlled, according to the overhead content of each incoming packet.

Besides, in synchronous circuit-switched networks, a switch (which is termed TDM switch) switches each tributary channel according to its position into the TDM flow.

A TDM switch comprises a TDM matrix, which is typically implemented as a memory. Each matrix input is adapted to write in predetermined portions of the memory in predetermined time slots. Besides, each matrix output is adapted to read from predetermined portions of the memory in predetermined time slots. The predetermined time slots are estimated by recovering the reference clock signal of the synchronous network, so that writing and reading operations are synchronized.

Each TDM switch has a routing table indicating, for each matrix output, an ordered list of the tributary channels that must be taken by the matrix output. The routing table of a TDM switch is static, i.e. it is modified only when changes in the channel configuration occur (e.g. one or more tributary channels are switched on or switched off).

Each matrix output is provided with a source address generator. The source address generator of each matrix output generates, by processing the information contained into the static routing table, an ordered list of source addresses. A source address is a memory address indicating the position of the memory portions containing the tributary channel to be taken, as it will be described in greater detail herein after.

Integrated telecommunication networks are networks comprising different sub-networks which are based on different transmission technologies. For instance, an integrated transport network may comprise a circuit-switched synchronous backbone (e.g. SDH or Sonet), connected to different packet-switched local networks (e.g. Ethernet, ATM or the like). In integrated telecommunication networks, information flows incoming to a node may comprise both TDM flows and packets. Therefore, nodes of an integrated transport network must be able to handle both TDM flows and packets. Therefore, a switch for integrated network must comprise both a TDM switching capability and a packet switching capability.

A first known arrangement for implementing a switch for integrated network is providing a node comprising two separated switch devices, i.e. a TDM switch and a packet switch. This first known arrangement however has many disadvantages. First of all, it is very costly, as all the resources of the switch are duplicated. Moreover, it does not allow an efficient exploitation of both devices. In fact, depending on the ratio between TDM flow capacity and packet capacity, a percentage of the processing capacity of each device will not be exploited.

A second known arrangement for implementing a switch for integrated networks is providing a single packet switch which is adapted to switch both TDM flows and packets. Packets are switched as described above. Each TDM flow is divided into blocks and each block is provided with a respective overhead. Hence, TDM flow blocks may be stored into buffer queues of the packet switch and they can be processed as if they were packets.

Also this second known arrangements involves disadvantages. First of all, a high number of buffers must be provided, as both packets and TDM flow blocks must be stored. Besides, managing TDM flows through queues introduces variable delays, which results in degradation of services supported by TDM flows. Moreover, this solution is disadvantageous when applied to multicast or broadcast transmissions, wherein the same information is transmitted to a plurality of destination nodes, as for each TDM flow block a number of copies must be provided which equals the number of destination nodes. Thus, multicast and broadcast transmission become very complex from processing point of view.

Another known arrangement providing combined TDM and packet switching is disclosed in US 2004/0 170 167.

According to the above considerations, a general object of the present invention is providing a switch for integrated telecommunication networks which overcomes the aforesaid problems.

In particular, a first object of the present invention is providing a switch for integrated telecommunication networks which is able to switch both TDM flows and packets by means of a single switching matrix and wherein the exploitation of the switch resources is optimized and independent from the ratio between TDM flow capacity and packet capacity.

A further object of the present invention is providing a switch for integrated telecommunication networks wherein TDM flows and packets undergo a fixed delay.

A further object of the present invention is providing a switch for integrated telecommunication networks wherein multicast and broadcast transmission can be easily implemented, both for TDM flows and for packets.

According to a first aspect, the present invention provides a switch for telecommunication networks comprising a time division multiplexing matrix provided with a number of matrix inputs and a number of matrix outputs; and source address generators connected to matrix outputs of the time division multiplexing matrix. The switch further comprises input modules, each of said input modules being adapted to generate a fixed size block, said block comprising a number of packets arranged according to a predefined order; matrix input processing modules, each of said matrix input processing modules being connected to an input module to receive therefrom said fixed size block, and each of said matrix input processing modules being further connected to a matrix input; and a dynamic provisioning module, which is adapted to receive from said matrix input processing modules routing information comprised in said packets, generate, according to said routing information, a dynamic routing table, and supply said dynamic routing table to the source address generators.

Preferably, it further comprises a static provisioning module which is adapted to supply a static routing table to said source address generators.

According to one embodiment, the fixed size block further comprises a portion of time division multiplexing flow. In this case, the switch further comprises a clock module for recovering from the time division multiplexing flow a reference clock signal, and supplying the reference clock signal to source address generators.

Preferably, the routing information is sent to said dynamic provisioning module according to the predefined order.

According to one embodiment, the predefined order corresponds to the order of matrix outputs to which packets are addressed.

Preferably, the switch is at least partially implemented in an application specific integrated circuit.

According to a second aspect, the present invention provides a method of switching information flows in a telecommunication network, the method comprising: generating fixed size blocks comprising a number of packets which are arranged according to a predefined order; taking routing information from the packets, generating, according to said routing information, a dynamic routing table; generating source addresses according to said dynamic routing table; and supplying said source addresses to matrix outputs of a time division multiplexing matrix.

The source addresses are preferably generated according to a static provisioning table.

According to one embodiment, the fixed size blocks are generated with a portion of a time division multiplexing flow.

The method preferably comprises: recovering a reference clock signal from said time division multiplexing flow; and timing the step of generating source addresses according to said reference clock signal.

The step of taking routing information preferably comprises taking routing information according to said predefined order.

A French patent application filed by the same Applicant of the present application, which was filed before the present patent application, but published afterward, describes a switching system comprising input modules each connected to a switching matrix and to a corresponding controller. Each input module organizes packets that it receives into digital data blocks with a fixed size, and makes transfers of these blocks by successive cycles to the matrix. Each of these blocks is organized into groups of digital data, these groups having corresponding modifiable sizes and being stored according to a predetermined order and associated with the corresponding output ports in the system. Each of these groups is formed of packets to be sent to a single corresponding output port. Any block transfer to the matrix is accompanied by transmission of information representative of the corresponding sizes of the groups of the transferred block to the said controller, and the groups of each transferred block are switched to their corresponding destination output ports as a function of this information representing the sizes.

This French patent application neither describes nor suggests to provide a switch for integrated networks for switching both TDM flows and packets. Furthermore, this patent application neither describes nor suggests to dynamically generate, according to overhead of incoming packets, source addresses of packets, thus using said source addresses to control the matrix outputs of a TDM matrix for switching the packets.

On the contrary, according to the present invention, the input modules arrange packets according to a predefined order; the matrix input processing modules drop the overheads of the packets into the same predefined order, and send them to the dynamic provisioning module. The dynamic provisioning module processes the overheads and provides a dynamic routing table, which allows the source address generators to generate source addresses for the packets.

Thus, the switch according to the present invention advantageously allows to avoid duplicating the resources of the switch, thus reducing the device cost.

Moreover, the switch according to the present invention advantageously allows to optimize the exploitation of the switch resources, independently from the composition of the incoming traffic flow.

Besides, the switch according to the present invention advantageously allows to easily implement multicast and broadcast transmission, as the TDM matrix is controlled through its matrix outputs.

Besides, the switch according to the present invention advantageously allows to introduce a fixed delay both on TDM traffic and on packet traffic, as traffic management by means of queues is avoided.

Further features and advantages of the present invention will become clear by the following detailed description, given by way of example and not of limitation, to be read with reference to the accompanying drawings, wherein:

- Figure 1 schematically shows a known packet switch;
- Figure 2 schematically shows a known TDM switch;
- Figure 3 schematically shows a switch for integrated networks according to the present invention;
- Figures 4a and 4b schematically show blocks as generated by an input module according to the present invention;
- Figure 5 schematically shows an example of the method for switching TDM flows and packets according to the present invention; and
- Figure 6 shows an example of the method for switching TDM multicast flows according to the present invention.

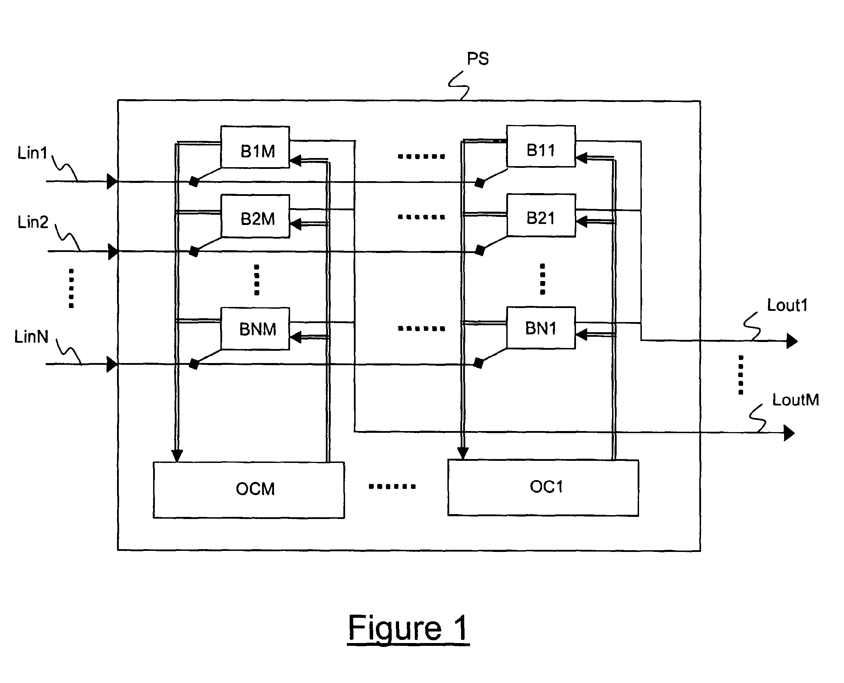

Figure 1 schematically shows a known packet switch PS. The packet switch PS is connected to a number N of input lines Lin1, Lin2, ..., LinN, and to a number M of output lines Lout1, ... LoutM. The packet switch PS further comprises NxM buffers. More particularly, the first input line Lin1 is connected to M buffers B11, ... B1M; the second input line Lin2 is connected to M buffers B21, ... B2M; and the $N^{th}$ input line LinN is connected to M buffers BN1, ... BNM. The packet switch PS further comprises M output controllers OC1, ... OCM. In particular, the buffers B11, B21, ... BN1 are connected the output controller OC1; and the buffers B1M, B2M, ... BNM are connected to the output controller OCM. Moreover, the buffers B11, B21, ... BN1 are connected to the output line Lout1, and the buffers B1M, B2M, ... BNM are connected to the output line LoutM.

The operation of the packet switch PS, which has already been described in the introduction of the present description, will be only briefly summarized herein after.

A packet incoming through the input line Lin1 is stored in one of the buffers B11, ... B1M, according to the content of its overhead. In each buffer, packets are stored in a queue, waiting to be taken by the corresponding output line Lout1, ... LoutM. The same considerations apply also to the other input lines Lin2, ... LinN.

The output controller OC1 associated to the output line Lout1 receives from the buffers B11, B21, ... BN1 information about the status of the queue of each of buffers B11, B21, ... BN1. According to these information, the output controller OC1 determines the order according to which packets into the buffers B11, B21, ... BN1 must be taken by the output line Lout1. The same considerations apply also to the other output lines Lout2, ... LoutM.

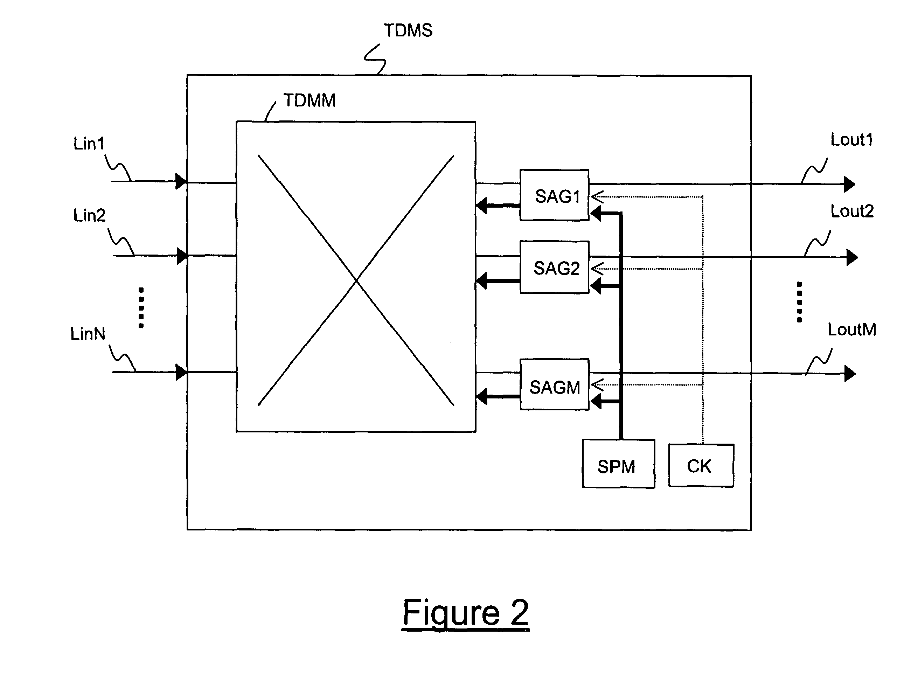

Figure 2 schematically shows a known TDM switch. The TDM switch TDMS is connected to a number N of input lines Lin1, Lin2, ... LinN and to a number M of output lines Lout1, Lout2, ... LoutM. The TDM switch TDMS further comprises a TDM matrix TDMM. The matrix TDMM may be implemented as a memory. Each matrix output is connected to a respective source address generator SAG1, SAG2, ... SAGM. The switch TDMS further comprises a clock module CK, which is adapted to recover the reference clock signal of the synchronous network and to provide it to the source address generators SAG1, SAG2, ... SAGM. Besides, the source address generators are connected to a static provisioning module SPM. The static provisioning module SPM is adapted to provide the source address generators SAG1, SAG2, ... SAGM with a static routing table. As already mentioned, the static routing table indicates, for each matrix output, an ordered list of the tributary channels that must be taken. According to the static routing table provided by the static provisioning module SPM, each source address generator SAG1, SAG2, ... SAGM generates, for the respective matrix output, an ordered list of source addresses indicating the memory position of the tributary channels that must be taken. Hence, each matrix output sends to the respective output line a TDM flow which is composed by the taken tributary channels.

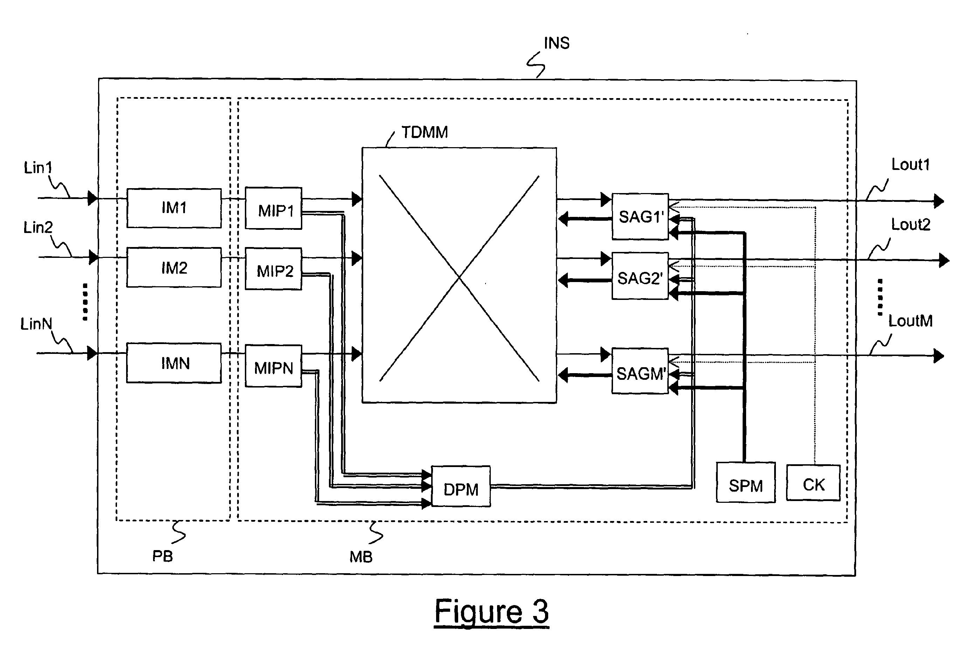

Figure 3 schematically shows a switch for integrated telecommunication networks according to the present invention. The switch for integrated networks INS is connected to a number N of input lines Lin1, Lin2, ... LinN and to a number M of output lines Lout1, Lout2, ... LoutM. Each input line Lin1, Lin2, ... LinN enters the switch INS through a respective input module IM1, IM2, ... IMN. The switch INS further comprises a TDM matrix TDMM, having N matrix inputs and M matrix outputs (not shown in Figure 3). The matrix TDMM may be implemented as a memory. Each input module IM1, IM2, ... IMN is connected to a respective matrix input through a respective matrix input processing module MIP1, MIP2, ... MIPN. Each matrix output is provided with a respective source address generator SAG1', SAG2', ...SAGM'. The switch INS further comprises a clock module CK, which is adapted to recover a reference clock signal of the synchronous network and to provide it to the source address generators SAG1', SAG2', ... SAGM'. Besides, each source address generator SAG1', SAG2', ... SAGM' is connected to a static provisioning module SPM. The switch INS, according to the present invention, comprises also a dynamic provisioning module DPM. Each matrix input processing module MIP1, MIP2, ... MIPN is connected to the dynamic provisioning module DPM. The output of the dynamic provisioning module DPM is connected to all the source address generators SAG1', SAG2', ... SAGM'.

It has to be noticed that typically the input modules IM1, IM2, ... IMN are implemented on a port board PB, together with other port devices (not shown in Figure 3). On the other hand, the TDM matrix, the matrix input processing modules, the source address generators, the static provisioning module and the dynamic provisioning module are typically implemented through one or more chips on a same matrix board MB, which is separated from the port board PB. In another embodiment (not shown), only a single board is provided for input modules, TDM matrix, matrix input processing modules, source address generators, static provisioning module and dynamic provisioning module, which may be implemented either through one or more chips. According to a preferred embodiment of the present invention, the memory implementing the TDM matrix is a data RAM memory, which is divided into two parts. While a first part is being written by the matrix inputs, a second part is being read by the matrix outputs, and *vice versa.*

According to a preferred embodiment of the present invention, the memory is implemented as a number of memories working in parallel. This allows to speed up the reading functions performed by the matrix outputs.

According to a preferred embodiment of the present invention, the TDM matrix comprises a main matrix and a spare matrix, which is substantially identical to the main matrix. Typically, incoming traffic is bridged both to the main matrix and to the spare matrix, which both perform switching at the same time. Output ports (not shown) receive output flows both from the main and spare matrices. During normal operation, the output ports select the flows from the main matrix. Should the main matrix become failed, the output ports will select the flows from the spare matrix.

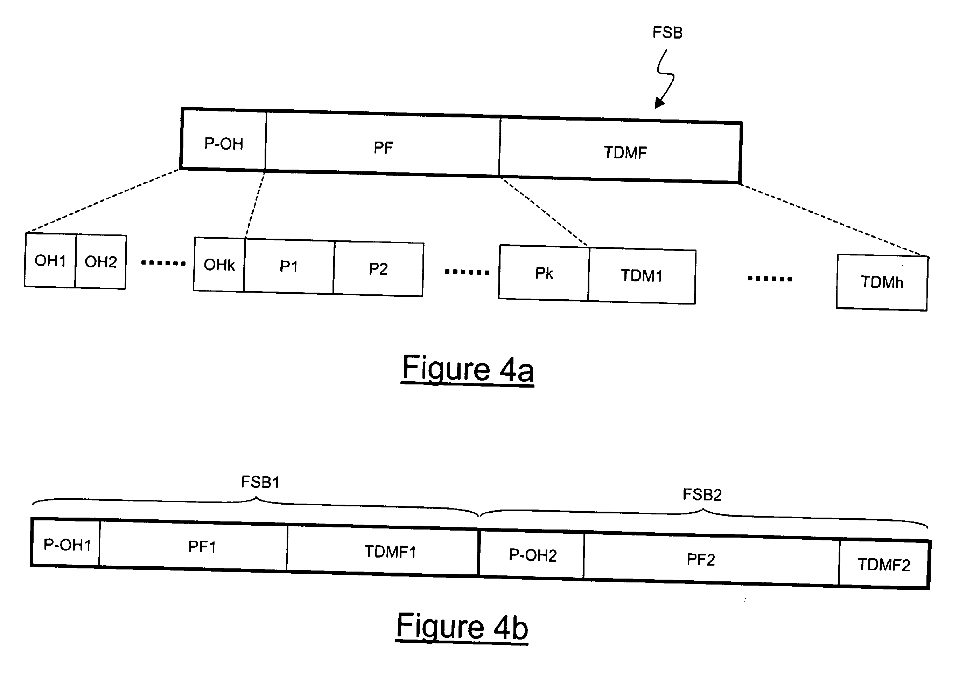

Herein after, by referring to Figure 3, 4a and 4b, a detailed description of the switch INS operation according to the present invention will be provided.

According to the present invention, each input line Lin1, Lin2, ... LinN of the switch INS is adapted to receive a respective information flow, which may comprise only TDM flows, packets or both TDM flows and packets. According to the present invention, each information flow incoming at the switch INS through the input line Lin1, Lin2, ... LinN, is divided by the respective input modules IM1, IM2, ... IMN in blocks having fixed size. Additional processing functions of the input flows are performed by other port devices, which are not described, as they are not relevant for the present description.

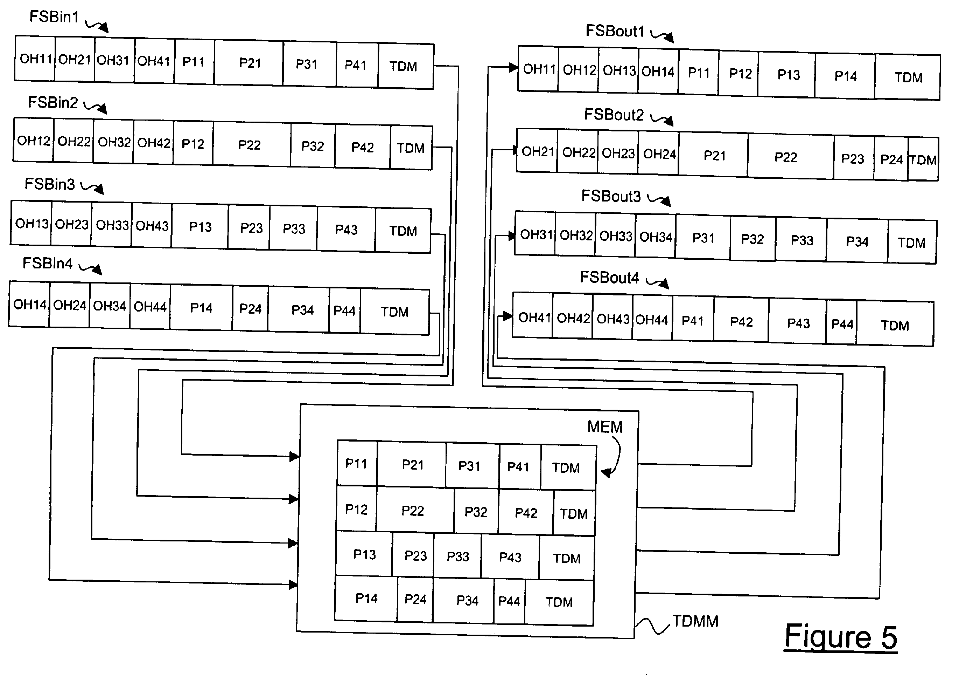

Figure 4a schematically shows the structure of an example of a block generated by an input module. The fixed-size block FSB comprises a packet overhead field P-OH, a packet field PF and a TDM field TDMF. The packet field PF comprises a number k of packets P1, P2, ... Pk. Such packets may have all the same size, or they can have different sizes, according to the protocol transporting them. The overall dimension of the packet field PF is thus variable, and it depends both on the number k of packets and on the size of each packet. The packets P1, P2, ... Pk are arranged into the packet field PF according to a predefined order. For instance, in a preferred embodiment of the invention, packets are arranged according to their respective destination output lines, as it will be shown in greater detail by referring to Figure 5.

The packet overhead field P-OH comprises the overheads of the packets P1, P2, ... Pk. Preferably, the overheads are arranged according to the same predefined order as the packets. Thus, the packet overhead field P-OH comprises the overhead OH1 of the packet P1, the overhead OH2 of the packet P2 and the overhead OHk of the packet Pk.

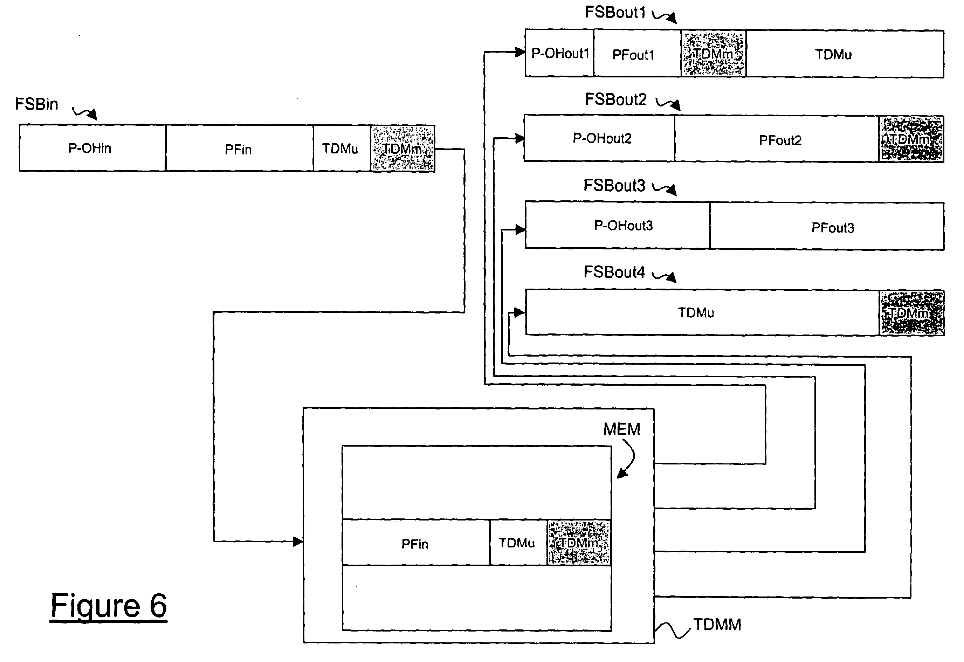

Finally, the fixed-size block FSB may comprise a portion of a TDM flow. It has to be noticed that the TDM field may comprise different portions TDM1, ... TDMh of different TDM flows. For instance, the TDM field may comprise portions of unicast TDM flows (e.g. SDH frame, Sonet frame), and/or portions of a multicast/broadcast TDM flow (e.g. a video signal). Switching of multicast/broadcast TDM flows will be described in detail with reference to Figure 6.

It must be noticed that the composition of each fixed size block dynamically changes according to the composition of the traffic flow. For instance, one or more tributary channels of the TDM flow may be switched off, or the transmission of a video signal may finish. In these cases, the size of the TDM field decreases, and consequently the packet field size and the packet overhead field size increase. This is shown in Figure 4b, which shows two consecutive blocks FSB1, FSB2 generated by a same input module according to the present invention. It can be noticed that the size of the TDM field TDMF1 of the first block FSB1 is larger than the size of the TDM field TDMF2 of the second block FSB2. Thus, in the block FSB2, a larger portion of the block is available for arranging packets and their overheads.

It has to be noticed that, if the incoming information flow comprises only packets, there is no TDM field into the block. Similarly, if the incoming information flow comprises only TDM flows, there are no packet overhead field and packet field into the block, as it will be shown herein after, with reference to Figure 6.

After each input module IM1, IM2, ... IMN has generated a respective block as shown in Figure 4a and 4b, each input module sends it to the respective matrix input processing module MIP1, MIP2, ... MIPN. Each matrix input processing module MIP1, MIP2, ... MIPN drops the packet overhead field P-OH from the respective block, and sends it to the dynamic provisioning module DPM.

The dynamic provisioning module DPM, according to the content of the packet overhead fields received from the matrix input processing modules, generates a dynamic routing table. More specifically, the dynamic routing table may contain, for each matrix output:

- the starting memory address of each packet that the matrix output has to take, and
- the size of each packet that the matrix output has to take.

The dynamic provisioning module DPM sends such a dynamic routing table to the source address generators SAG1', SAG2', ... SAGM'. Furthermore, the source address generators SAG1', SAG2', ... SAGM' receive from the static provisioning module SPM a static routing table relative to the TDM portions. Therefore, by processing both the dynamic routing table and the static routing table, each source address generator SAG1', SAG2', ... SAGM' generates, for its respective matrix output, an ordered list of source addresses, i.e. an ordered list of memory addresses from where the matrix output may take packets and TDM portions.

Thus, according to the present invention, both TDM flows and packets are switched by the same TDM matrix, which is controlled by means of the source address of the matrix outputs. Source addresses may be generated either dynamically (for packets) or statically (for portions of TDM flows).

It has to be noticed that, advantageously, according to the present invention, failures or down times of the main matrix can be managed in a substantially transparent manner. In fact, as switching is performed by a TDM matrix which is controlled by means of its outputs, and all the incoming traffic is bridged both to the main and to the spare matrixes, managing main matrix failures can be performed in a "hitless" manner, i.e. without loosing any portion of the incoming traffic.

Besides, as already mentioned with reference to Figure 4b, the composition of a block may be different from the composition of the following block. In particular, changes in TDM flows and/or in packets result in changes of the TDM field size and packet field size (see blocks FSB1 and FSB2 of Figure 4b). As already mentioned, the memory is divided into two parts. The two parts are able to store succeeding blocks. While a first part is being written by the matrix inputs, a second part is being read by the matrix outputs, and *vice versa*. For instance, with reference to Figure 4b, while first block FSB1 is being read from a first memory part, the second block FSB2 is being written into a second memory part. According to the present invention, in such a situation the dynamic routing table allows to upgrade in real time the packets source addresses, while a new static routing table must be provided in order to update the TDM portions source addresses. In a preferred embodiment of the invention, a plurality of static routing tables may be provided to the source address generators, each routing table corresponding to a different block composition. For instance, by referring to Figure 4b, two static routing tables may be provided both for the block FSB1 and for the block FSB2, respectively. In this way, a delayed provisioning of the new static routing table is avoided, and TDM portion source addresses can be transparently updated.

An example of the method for switching both TDM flows and packets according to the present invention will be now described with reference to Figure 5.

Figure 5 shows a TDM matrix having four matrix inputs and four matrix outputs. Each input module (not shown) provides the respective matrix input processing module (not shown) with a fixed size block FSBin1, FSBin2, FSBin3, FSBin4. Each block comprises both a packet field, and a TDM field. More particularly, each block comprises four packets, each packet being addressed to a different destination matrix output, and a number of TDM portions. In the following description, only packet switching will be described in detail; on the contrary, a detailed description of the switching of the TDM flow can be found into the description of Figure 2.

As above mentioned, according to the present invention, each input module arranges packets according to a predefined order. In Figure 5, packets are ordered according to their destination matrix outputs. In Figure 5 each packet is marked with two indexes; a first index indicates the matrix output the packet is addressed to (destination matrix output), while the second index indicates the matrix input the packet comes from (source matrix input). Thus, the fixed size block FSBin1 comprises packets P11, P21, P31 e P41. Similarly, the fixed size block FSBin2 comprises packets P12, P22, P32 e P42. Similarly, the fixed size block FSBin3 comprises packets P13, P23, P33 e P43. Finally, the fixed size block FSBin4 comprises packets P14, P24, P34 e P44. It has to be noticed that, as already mentioned, packets have different sizes, so that packet fields of the four blocks have different sizes.

Each block FSBin1, FSBin2, FSBin3, FSBin4 further comprises a packet overhead field, which in turn comprises the packet overheads arranged according to the same predefined order of packets. Thus, the packet overhead field of the block FSBin1 comprises the overhead OH11 of the packet P11, the overhead OH21 of the packet P21, the overhead OH31 of the packet P31, and the overhead OH41 of the packet P41. Similar considerations apply also to blocks FSBin2, FSBin3 and FSBin4.

Each overhead may for instance comprise packet size, an identifier of the destination matrix output and an identifier of the source matrix input. Thus, the overhead OHyx of a packet Pyx may be expressed as:

$$OHyx = (W_{yx}, y, x),$$

wherein $W_{yx}$ is the size of the packet Pyx, y is the identifier of the destination matrix output of the packet Pyx and x is the identifier of the source matrix input of the packet Pyx. It has to be noticed that, as the order according to which packets are arranged in a block is predefined, the identifier of the destination matrix output and the identifier of the source matrix input can be omitted. In this case, even if a packet has size equal to 0, its overhead can not be omitted, in order to preserve the predefined order.

As already mentioned, a TDM matrix may be implemented as a memory. When a TDM matrix switches TDM flows, matrix inputs are able to write at predetermined memory addresses, while the matrix outputs are able to read from predetermined memory addresses. Similarly, the TDM matrix TDMM comprised into the switch INS according to the present invention may be implemented as a memory. However, as the switch INS according to the invention is adapted to switch variable size packets, the memory positions wherein packets are stored dynamically change according to packet size.

Figure 5 shows an example of a TDM matrix TDMM comprising a two-dimensional memory MEM, i.e. a memory comprising a number of rows and a number of columns. Thus, a memory address comprises a row address and a column address.

Under the assumption that each matrix input writes the packets of the respective block one after the other into a respective row of the memory MEM, the column addresses of the packets comprised in the block FSBin1 are:

- column address of packet P11: 0;
- column address of packet P21: $W_{11}$;
- column address of packet P31: $W_{11} + W_{21}$;
- column address of packet P41: $W_{11} + W_{21} + W_{31}$; and
- column address of the first TDM word: $W_{11} + W_{21} + W_{31} + W_{41}$.

Similarly, the column addresses of the packets comprised in the block FSBin2 are:

- column address of packet P12: 0;
- column address of packet P22: $W_{12}$;
- column address of packet P32: $W_{12} + W_{22}$;
- column address of packet P42: $W_{12} + W_{22} + W_{32}$; and
- column address of the first TDM word: $W_{12} + W_{22} + W_{32} + W_{42}$.

Similar considerations apply to blocks FSBin3 and FSBin4. Thus, each memory row comprises one after the other packets comprised in a block of a respective matrix input, as shown in Figure 5.

As each packet address dynamically varies with the size of all the packets comprised into the block, the present invention provides a dynamic provisioning module DPM. The dynamic provisioning module DPM processes the packet overhead field of each block, in order to generate a dynamic routing table. As already mentioned, for each matrix output, the dynamic routing table comprises the starting address of the packets that the matrix output has to take, and the size of each packet that the matrix output has to take.

For instance, for the first matrix output, the dynamic routing table provides:

- for packet P11: row 0, column 0, size= $W_{11}$;
- for packet P12: row 1, column 0, size= $W_{12}$;
- for packet P13: row 2, column 0, size= $W_{13}$; and
- for packet P14: row 3, column 0, size= $W_{14}$.

For the second matrix output, the dynamic routing table provides:

- for packet P21: row 0, column $W_{11}$, size= $W_{21}$;
- for packet P22: row 1, column $W_{12}$, size= $W_{22}$;
- for packet P23: row 2, column $W_{13}$, size= $W_{23}$; and
- for packet P24: row 3, column $W_{14}$, size= $W_{24}$.

For the third matrix output, the dynamic routing table provides:

- for packet P31: row 0, column $W_{11}+ W_{21}$, size= $W_{31}$;
- for packet P32: row 1, column $W_{12}+ W_{22}$, size= $W_{32}$;
- for packet P33: row 2, column $W_{13}+ W_{23}$, size= $W_{33}$; and
- for packet P34: row 3, column $W_{14}+ W_{24}$, size= $W_{34}$.

Finally, for the fourth matrix output, the dynamic routing table provides:

- for packet P41: row 0, column $W_{11}+ W_{21}+ W_{31}$, size= $W_{41}$;
- for packet P42: row 1, column $W_{12}+ W_{22}+ W_{32}$, size= $W_{42}$;
- for packet P43: row 2, column W13+ W23+ W33, size= W43; and
- for packet P44: row 3, column $W_{14}+ W_{24}+ W_{34}$, size= $W_{44}$.

The dynamic provisioning module DPM provides the dynamic routing table to the source address generators. The source address generators, according to these information generate the source addresses, i.e. the memory addresses of each word of each packet.
Further, each source address generator is able to determine the starting address of the TDM portions. For instance, for the first row, corresponding to the fist matrix input, the starting address of the TDM portion is given by the following formula:

$$\sum_{y=1}^{M} W_{y1} \cdot \qquad (1)$$

Similar formulas can be applied for the other rows. Further, as each block has a fixed dimension, the formula (1) also allows the source address generators to determine the dimension of the TDM field TDMF.
Similarly, the source address generators are able, for each matrix output, to determine the starting address of the TDM portions. More particularly, by estimating, for the first matrix output:

$$\sum_{x=1}^{N} W_{1x} , \qquad (2)$$

the source address generator of the first matrix output estimates the address wherein dynamic switching is replaced by static switching. Similar considerations also apply to the other matrix outputs.
It must be noticed that, for avoiding congestion of the TDM matrix, for each matrix output the following condition must be fulfilled:

$$\sum_{x=1}^{N} W_{yx} \leq C_y , \tag{3}$$

wherein x is the matrix input identifier, y is the matrix output identifier, and $C_y$ is the capacity of the matrix output y. Besides, for avoiding congestion also the following condition must be fulfilled for each matrix input:

$$\sum_{y=1}^{M} W_{yx} \leq C_x , \tag{4}$$

wherein $C_x$ is the capacity of the matrix input x.

According to the present invention, congestion management is performed by a suitable congestion management algorithm. The congestion management algorithm determines, for each block, the maximum number of packets that the block may comprise and the maximum size of each packet comprised into the block, in order to assure that the conditions expressed by (3) and (4) are fulfilled.

In a preferred embodiment of the present invention, the congestion management algorithm is implemented on a dedicated device, which is generally termed central scheduler, which is not shown in Figure 4. This central scheduler, in a preferred embodiment of the invention, is implemented on a chip which is located on the matrix board.

Figure 6 shows an example of the method for switching TDM multicast flows according to the present invention. Figure 6 shows a TDM matrix TDMM having a number of matrix input; for simplicity, only a matrix input is shown in Figure 6. Such a matrix input receives from the corresponding input module (not shown in Figure 6) a block FSBin, which comprises a packet overhead field P-OHin, a packet field PFin and a TDM field. As already mentioned, a TDM field may comprise portions of different TDM flows. For instance, the TDM field of the block FSBin comprises a portion TDMu of a unicast flow (e.g. a portion of an SDH TDM flow). The TDM field of the block FSBin further comprises a portion TDMm of a multicast flow (e.g. a portion of a video signal). The TDM matrix of Figure 6 is provided with four matrix outputs. It is assumed that the portion TDMm of multicast flow is addressed to the first, second and fourth matrix outputs (not to the third matrix output).

According to the present invention, the matrix input simply writes the multicast flow portion TDMm into the memory MEM of the matrix TDMM as described by referring to Figure 5. Thus, only a single copy of the portion TDMm is stored into the memory MEM, and each destination matrix output is simply required to read said copy of the portion TDMm from its source address. As it can be observed in Figure 6, each of the first, second and fourth destination matrix outputs reads the portion TDMm from the memory MEM and inserts it into its respective output block FSBout1, FSBout2, FSBout4. The position of the portion TDMm into each output block depends both on static and on dynamic routing tables. It can be noticed, that, as already mentioned, no packet is addressed to the matrix output 4. In this case, the whole fixed-size block FSBout4 comprises TDM portions, and neither the packet field PF nor the packet overhead field P-OH are included into the block.

Thus, according to the present invention, multicasting is implemented by source address generators and by the matrix outputs, while matrix inputs and the memory are not required to create and store, respectively, a plurality of copies of the TDMm portion. This allows to reduce the processing complexity of multicasting and broadcasting transmissions.

**Claims**

1. A switch for telecommunication networks, comprising:

 - a time division multiplexing matrix (TDMM) provided with a number of matrix inputs and a number of matrix outputs;
 - source address generators (SAG1', SAG2', ... SAGM'), connected to matrix outputs of the time division multiplexing matrix (TDMM);

 **characterized in that** it further comprises:

 - input modules (IM1, IM2, ... IMN), each of said input modules being adapted to generate a fixed size block (FSB), said block comprising a number of packets (P1, P2, ... Pk), arranged according to a predefined order;

- matrix input processing modules (MIP1, MIP2, ... MIPN), each of said matrix input processing modules being connected to an input module to receive therefrom said fixed size block (FSB), and each of said matrix input processing modules being further connected to a matrix input; and
- a dynamic provisioning module (DPM), which is adapted to

- receive from said matrix input processing modules (MIP1, MIP2, ... MIPN) routing information (OH1, OH2, ... OHk) comprised in said packets (P1, P2, ... Pk),
- generate, according to said routing information, a dynamic routing table, and
- supply said dynamic routing table to the source address generators (SAG1', SAG2', ... SAGM').

2. The switch according to claim 1, further comprising a static provisioning module (SPM) which is adapted to supply a static routing table to said source address generators (SAG1', SAG2', ... SAGM').

3. The switch according to claim 2, wherein said fixed size block (FSB) further comprises a portion of time division multiplexing flow.

4. The switch according to claim 3, further comprising a clock module (CK) for recovering from said time division multiplexing flow a reference clock signal, and supplying said reference clock signal to source address generators (SAG1', SAG2', ... SAGM').

5. The switch according to any of previous claims, wherein said routing information (OH1, OH2, ... OHk) is sent to said dynamic provisioning module (DPM) according to said predefined order.

6. The switch according to any of previous claims, wherein said predefined order corresponds to the order of matrix outputs to which packets are addressed.

7. The switch according to any of previous claims, wherein said time division multiplexing matrix (TDMM) comprises a memory, wherein said matrix inputs are adapted to write into said memory, and wherein said matrix outputs are adapted to read from said memory.

8. The switch according to claim 7, wherein each of said matrix inputs writes said packets into said memory according to said predefined order, in contiguous positions.

9. The switch according to claim 8, wherein said routing information comprise a packet size.

10. The switch according to claim 9, wherein said source addresses of said packets are generated according to said packet size.

11. The switch according to any of previous claims, wherein it is at least partially implemented in an application specific integrated circuit.

12. A method of switching information flows in a telecommunication network, said method comprising:

- generating fixed size blocks (FSB) comprising a number of packets (P1, P2, ... Pk) which are arranged according to a predefined order;
- taking routing information (OH1, OH2, ... OHk) from said packets (P1, P2, ... Pk),
- generating, according to said routing information, a dynamic routing table;
- generating source addresses according to said dynamic routing table; and
- supplying said source addresses to matrix outputs of a time division multiplexing matrix .

13. The method according to claim 12, wherein the step of generating source addresses further comprises generating source addresses according to a static provisioning table.

14. The method according to claim 13, wherein the step of generating fixed size blocks comprises generating fixed size blocks comprising a portion of a time division multiplexing flow.

15. The method according to claim 14, further comprising:

- recovering a reference clock signal from said time division multiplexing flow; and
- timing the step of generating source addresses according to said reference clock signal.

16. The method according to any of claims 12 to 15, wherein the step of taking routing information comprises taking routing information (OH1, OH2, ... OHk) according to said predefined order.

17. The method according to any of claims 12 to 16, wherein said predefined order corresponds to the order according to which packets are addressed.

18. The method according to any of claims 12 to 17, further comprising:

- writing said information flows into a memory; and
- reading from a memory said information flows.

19. The method according to claim 18, wherein the step of writing comprises writing said packets into said memory according to a predefined order, in contiguous positions.

20. The method according to claim 19, wherein said routing information comprise a packet size.

21. The method according to claim 20, wherein the step of generating source addresses according to said dynamic routing table comprises generating source addresses according to packet size.

22. A network element comprising a switch according to any of claims 1 to 11.

**Patentansprüche**

1. Vermittlung für Telekommunikationsnetzwerke, umfassend:

- eine Zeitmultiplexmatrix (TDMM), die mit einer Anzahl von Matrixeingängen und einer Anzahl von Matrixausgängen versehen ist;
- Quelladressgeneratoren (SAG1', SAG2',... SAGM'), die mit Matrixausgängen der Zeitmultiplexmatrix (TDMM) verbunden sind;

**dadurch gekennzeichnet, dass** sie weiter umfasst:

- Eingangsmodule (IM1, IM2,... IMN), wobei jedes der Eingangsmodule angepasst ist, um einen Block fester Größe (FSB) zu erzeugen, wobei der Block eine Anzahl von Paketen (P1, P2,... Pk) umfasst, die entsprechend einer vordefinierten Reihenfolge angeordnet sind;
- Matrixeingangsverarbeitungsmodule (MIP1, MIP2,... MIPN), wobei jedes der Matrixeingangsverarbeitungsmodule mit einem Eingangsmodul verbunden ist, um davon den Block fester Größe (FSB) zu empfangen, und wobei jedes der Matrixeingangsverarbeitungsmodule weiter mit einem Matrixeingang verbunden ist; und
- ein dynamisches Bereitstellungsmodul (DPM), das angepasst ist, um
- von den Matrixeingangsverarbeitungsmodulen (MIP1, MIP2,... MIPN) Leitweginformation (OH1, OH2,... OHk) zu empfangen, die in den Paketen (P1, P2,... Pk) enthalten ist,
- eine dynamische Leitwegtabelle entsprechend der Leitweginformation zu erzeugen, und
- den Quelladressgeneratoren (SAG1', SAG2',... SAGM') die dynamische Leitwegtabelle zur Verfügung zu stellen.

2. Vermittlung nach Anspruch 1, weiter umfassend ein statisches Bereitstellungsmodul (SPM), das angepasst ist, um den Quelladressgeneratoren (SAG1', SAG2',... SAGM') eine statische Leitwegtabelle zur Verfügung zu stellen.

3. Vermittlung nach Anspruch 2, bei der der Block fester Größe (FSB) weiter einen Teil eines Zeitmultiplexflusses umfasst.

4. Vermittlung nach Anspruch 3, weiter umfassend ein Taktmodul (CK), um aus dem Zeitmultiplexfluss ein Bezugstaktsignal wiederherzustellen und das Bezugstaktsignal Quelladressgeneratoren (SAG1', SAG2',... SAGM') zur Verfügung zu stellen.

5. Vermittlung nach einem der vorangehenden Ansprüche, bei der die Leitweginformation (OH1, OH2,... OHk) entsprechend der vordefinierten Reihenfolge zu dem dynamischen Bereitstellungsmodul (DPM) geschickt wird.

6. Vermittlung nach einem der vorangehenden Ansprüche, bei der die vordefinierte Reihenfolge der Reihenfolge von Matrixausgängen entspricht, zu denen Pakete adressiert sind.

7. Vermittlung nach einem der vorangehenden Ansprüche, bei der die Zeitmultiplexmatrix (TDMM) einen Speicher umfasst, wobei die Matrixeingänge angepasst sind, um in den Speicher zu schreiben, und wobei die Matrixausgänge angepasst sind, um aus dem Speicher zu lesen.

8. Vermittlung nach Anspruch 7, bei der jeder der Matrixeingänge die Pakete entsprechend der vordefinierten Reihenfolge in zusammenhängenden Positionen in den Speicher schreibt.

9. Vermittlung nach Anspruch 8, bei der die Leitweginformation eine Paketgröße umfasst.

10. Vermittlung nach Anspruch 9, bei der die Quelladressen der Pakete entsprechend der Paketgröße erzeugt werden.

11. Vermittlung nach einem der vorangehenden Ansprüche, wobei sie mindestens teilweise in einer anwendungsspezifischen integrierten Schaltung ausgeführt ist.

12. Verfahren zum Vermitteln von Informationsflüssen in einem Telekommunikationsnetzwerk, wobei das Verfahren umfasst:

   - Erzeugen von Blöcken fester Größe (FSB), die eine Anzahl von Paketen (P1, P2,... Pk) umfassen, die entsprechend einer vordefinierten Reihenfolge angeordnet sind;
   - Entnehmen von Leitweginformation (OH1, OH2,... OHk) aus den Paketen (P1, P2,... Pk),
   - Erzeugen einer dynamischen Leitwegtabelle entsprechend der Leitweginformation;
   - Erzeugen von Quelladressen entsprechend der dynamischen Leitwegtabelle; und
   - Zur-Verfügung-Stellen der Quelladressen an Matrixausgängen einer Zeitmultiplexmatrix.

13. Verfahren nach Anspruch 12, bei dem der Schritt eines Erzeugens von Quelladressen weiter umfasst: Erzeugen von Quelladressen entsprechend einer statischen Bereitstellungstabelle.

14. Verfahren nach Anspruch 13, bei dem der Schritt eines Erzeugens von Blöcken fester Größe umfasst: Erzeugen von Blöcken fester Größe, die einen Teil eines Zeitmultiplexflusses umfassen.

15. Verfahren nach Anspruch 14, weiter umfassend:

   - Wiederherstellen eines Bezugstaktsignals aus dem Zeitmultiplexfluss; und
   - Zeitsteuerung des Schritts eines Erzeugens von Quelladressen entsprechend dem Bezugstaktsignal.

16. Verfahren nach einem der Ansprüche 12 bis 15, bei dem der Schritt eines Entnehmens von Leitweginformation umfasst: Entnehmen von Leitweginformation (OH1, OH2,... OHk) entsprechend der vordefinierten Reihenfolge.

17. Verfahren nach einem der Ansprüche 12 bis 16, bei dem die vordefinierte Reihenfolge der Reihenfolge entspricht, entsprechend welcher Pakete adressiert werden.

18. Verfahren nach einem der Ansprüche 12 bis 17, weiter umfassend:

   - Schreiben der Informationsflüsse in einen Speicher; und
   - Lesen der Informationsflüsse aus einem Speicher.

19. Verfahren nach Anspruch 18, bei dem der Schritt eines Schreibens umfasst: Schreiben der Pakete in den Speicher entsprechend einer vordefinierten Reihenfolge in zusammenhängenden Positionen.

20. Verfahren nach Anspruch 19, bei dem die Leitweginformation eine Paketgröße umfasst.

21. Verfahren nach Anspruch 20, bei dem der Schritt eines Erzeugens von Quelladressen entsprechend der dynamischen Leitwegtabelle umfasst: Erzeugen von Quelladressen entsprechend einer Paketgröße.

**22.** Netzwerkelement, umfassend eine Vermittlung nach einem der Ansprüche 1 bis 11.

**Revendications**

**1.** Commutateur pour réseaux de télécommunication, comportant :

- une matrice de multiplexage par répartition dans le temps (TDMM) délivrée avec un certain nombre d'entrées de matrice et un certain nombre de sorties de matrice ;
- des générateurs d'adresses sources (SAG1', SAG2' ,..., SAGM') connectés à des sorties de matrice de la matrice de multiplexage par répartition dans le temps (TDMM) ;

**caractérisé en ce qu'**il comporte en outre :

- des modules d'entrée (IM1, IM2,... IMN), chacun desdits modules d'entrée étant adapté pour générer un bloc de taille fixe (FSB), ledit bloc comportant un certain nombre de paquets (P1, P2,..., Pk), agencés selon un ordre prédéfini ;
- des modules de traitement d'entrée de matrice (MIP1, MIP2,... MIPN), chacun desdits modules de traitement d'entrée de matrice étant connecté à un module d'entrée pour y recevoir ledit bloc de taille fixe (FSB), et chacun desdits modules de traitement d'entrée de matrice étant en outre connecté à une entrée de matrice ; et
- un module d'approvisionnement dynamique (DPM), qui est adapté pour

- recevoir desdits modules de traitement d'entrée de matrice (MIP1, MIP2, ..., MIPN) des informations de routage (OH1, OH2,... OHk) incluses dans lesdits paquets (P1, P2,... Pk) ,
- générer, selon lesdites informations de routage, une table de routage dynamique, et
- fournir ladite table de routage dynamique aux générateurs d'adresses sources (SAG1', SAG2', SAGM').

**2.** Commutateur selon la revendication 1, comportant en outre un module d'approvisionnement statique (SPM) qui est adapté pour fournir une table de routage statique auxdits générateurs d'adresses sources (SAG1', SAG2',..., SAGM').

**3.** Commutateur selon la revendication 2, dans lequel ledit bloc de taille fixe (FSB) comporte en outre une partie de flux de multiplexage par répartition dans le temps.

**4.** Commutateur selon la revendication 3, comportant en outre un module d'horloge (CK) en vue de récupérer à partir dudit flux de multiplexage par répartition dans le temps un signal d'horloge de référence, et délivrer ledit signal d'horloge de référence à des générateurs d'adresses sources (SAG1', SAG2 ' ,..., SAGM').

**5.** Commutateur selon l'une quelconque des revendications précédentes, dans lequel lesdites informations de routage (OH1, OH2,..., OHk) sont transmises audit module d'approvisionnement dynamique (DPM) selon ledit ordre prédéfini.

**6.** Commutateur selon l'une quelconque des revendications précédentes, dans lequel ledit ordre prédéfini correspond à l'ordre de sorties de matrice auxquelles des paquets sont adressés.

**7.** Commutateur selon l'une quelconque des revendications précédentes, dans lequel ladite matrice de multiplexage par répartition dans le temps (TDMM) comporte une mémoire, dans lequel lesdites entrées de matrice sont adaptées pour écrire dans ladite mémoire, et dans lequel lesdites sorties de matrice sont adaptées pour lire à partir de ladite mémoire.

**8.** Commutateur selon la revendication 7, dans lequel chacune desdites entrées de matrice écrit lesdits paquets dans ladite mémoire selon ledit ordre prédéfini, dans des positions contiguës.

**9.** Commutateur selon la revendication 8, dans lequel lesdites informations de routage comportent une taille de paquet.

**10.** Commutateur selon la revendication 9, dans lequel lesdites adresses sources desdits paquets sont générées selon ladite taille de paquet.

**EP 1 699 257 B1**

**11.** Commutateur selon l'une quelconque des revendications précédentes, où le commutateur est au moins partiellement mis en oeuvre dans un circuit intégré à application spécifique.

**12.** Procédé de commutation de flux d'informations dans un réseau de télécommunication, ledit procédé comportant les étapes consistant à :

- générer des blocs de taille fixe (FSB) comportant un certain nombre de paquets (P1, P2,... Pk) qui sont agencés selon un ordre prédéfini ;
- extraire des informations de routage (OH1, OH2,... OHk) desdits paquets (P1, P2,..., Pk),
- générer, selon lesdites informations de routage, une table de routage dynamique ;
- générer des adresses sources selon ladite table de routage dynamique ; et
- fournir lesdites adresses sources à des sorties de matrice d'une matrice de multiplexage par répartition dans le temps.

**13.** Procédé selon la revendication 12, dans lequel l'étape consistant à générer des adresses sources comporte en outre l'étape consistant à générer des adresses sources selon une table d'approvisionnement statique.

**14.** Procédé selon la revendication 13, dans lequel l'étape consistant à générer des blocs de taille fixe comporte l'étape consistant à générer des blocs de taille fixe comportant une partie d'un flux de multiplexage par répartition dans le temps.

**15.** Procédé selon la revendication 14, comportant en outre les étapes consistant à :

- récupérer un signal d'horloge de référence à partir dudit flux de multiplexage par répartition dans le temps ; et
- synchroniser l'étape consistant à générer des adresses sources selon ledit signal d'horloge de référence.

**16.** Procédé selon l'une quelconque des revendications 12 à 15, dans lequel l'étape consistant à prendre des informations de routage comporte l'étape consistant à prendre des informations de routage (OH1, OH2,... OHk) selon ledit ordre prédéfini.

**17.** Procédé selon l'une quelconque des revendications 12 à 16, dans lequel ledit ordre prédéfini correspond à l'ordre selon lequel des paquets sont adressés.

**18.** Procédé selon l'une quelconque des revendications 12 à 17, comportant en outre les étapes consistant à :

- écrire lesdits flux d'information dans une mémoire ; et
- lire lesdits flux d'information à partir d'une mémoire.

**19.** Procédé selon la revendication 18, dans lequel l'étape d'écriture comporte l'étape consistant à écrire lesdits paquets dans ladite mémoire selon un ordre prédéfini, dans des positions contiguës.

**20.** Procédé selon la revendication 19, dans lequel lesdites informations de routage comportent une taille de paquet.

**21.** Procédé selon la revendication 20, dans lequel l'étape consistant à générer des adresses sources selon ladite table de routage dynamique comporte l'étape consistant à générer des adresses sources selon la taille de paquet.

**22.** Elément de réseau comportant un commutateur selon l'une quelconque des revendications 1 à 11.

**14**

Figure 1

EP 1 699 257 B1

Figure 2

Figure 3

EP 1 699 257 B1

Figure 4a

Figure 4b

EP 1 699 257 B1

FSBin1

| OH11 | OH21 | OH31 | OH41 | P11 | P21 | P31 | P41 | TDM |

FSBin2

| OH12 | OH22 | OH32 | OH42 | P12 | P22 | P32 | P42 | TDM |

FSBin3

| OH13 | OH23 | OH33 | OH43 | P13 | P23 | P33 | P43 | TDM |

FSBin4

| OH14 | OH24 | OH34 | OH44 | P14 | P24 | P34 | P44 | TDM |

FSBout1

| OH11 | OH12 | OH13 | OH14 | P11 | P12 | P13 | P14 | TDM |

FSBout2

| OH21 | OH22 | OH23 | OH24 | P21 | P22 | P23 | P24 | TDM |

FSBout3

| OH31 | OH32 | OH33 | OH34 | P31 | P32 | P33 | P34 | TDM |

FSBout4

| OH41 | OH42 | OH43 | OH44 | P41 | P42 | P43 | P44 | TDM |

MEM

| P11 | P21 | P31 | P41 | TDM |
| P12 | P22 | P32 | P42 | TDM |
| P13 | P23 | P33 | P43 | TDM |
| P14 | P24 | P34 | P44 | TDM |

TDMM

Figure 5

EP 1 699 257 B1

FSBout1

P-OHout1 | PFout1 | TDMm | TDMu

FSBin

P-OHin | PFin | TDMu | TDMm

FSBout2

P-OHout2 | PFout2 | TDMm

FSBout3

P-OHout3 | PFout3

FSBout4

TDMu | TDMm

MEM

PFin | TDMu | TDMm

TDMM

## Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040170167 A